(19) Europäisches Patentamt
European Patent Office
Office européen des brevets

(11) EP 1 340 793 A1

(12) EUROPEAN PATENT APPLICATION

(43) Date of publication:
03.09.2003 Bulletin 2003/36

(21) Application number: 02004611.6

(22) Date of filing: 28.02.2002

(51) Int Cl.⁷: C08L 33/06, C07C 57/18, C07C 57/52, C07C 205/37, C08F 138/00, C30B 11/00, C08G 12/08, C08G 73/00

(84) Designated Contracting States:
AT BE CH CY DE DK ES FI FR GB GR IE IT LI LU MC NL PT SE TR
Designated Extension States:
AL LT LV MK RO SI

(71) Applicant: PIRELLI S.p.A.
20126 Milano (IT)

(72) Inventors:
- Zaopo, Antonio
  20137 Milano (IT)
- Dubitsky, Yury
  20159 Milano (IT)
- Zappettini, Andrea
  42100 Reggio Emilia (IT)
- D'Amore, Franco
  00126 Roma (IT)
- Destri, Silvia Maria
  20090 Rodano (IT)
- Porzio, William Umberto
  20137 Milano (IT)
- Pasini, Mariacecilia
  29100 Piacenza (IT)

(74) Representative: Giannesi, Pier Giovanni et al
Pirelli S.p.A.
Industrial Property Dept.
Viale Sarca, 222
20126 Milano (IT)

(54) **Optical waveguides based on NLO polymers**

(57) The invention relates to an optical waveguide comprising at least a non linear optical (NLO) polymer.

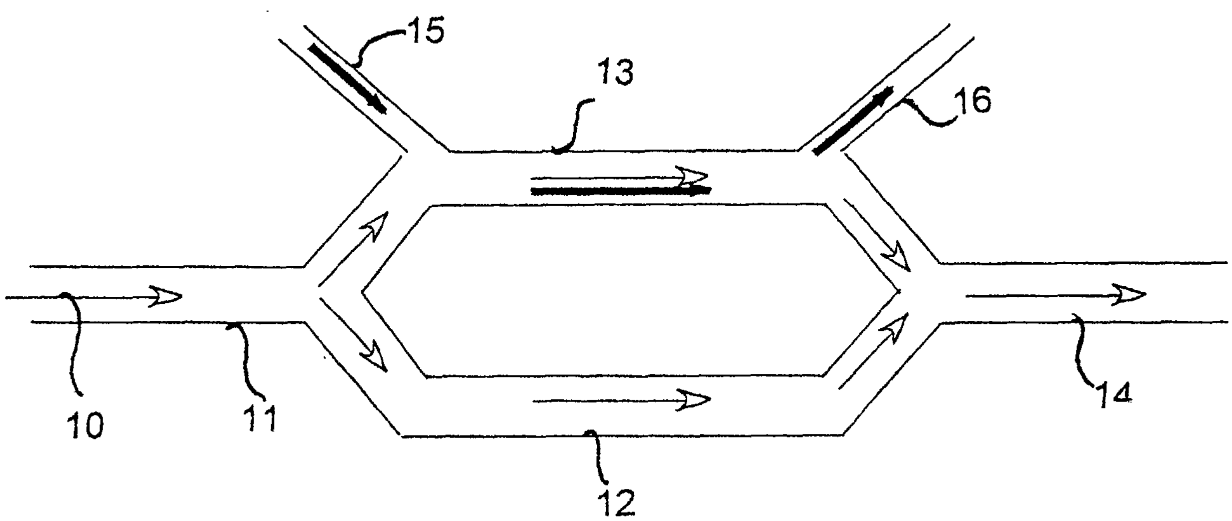


FIG. 2

EP 1 340 793 A1

## Description

The present invention refers to optical waveguides based on non-linear optical (NLO) polymers.

The deployment and growth in performance of optic communication systems take advantage of the possibility of directly switching and processing optical signals without recurring to conversion into electronic format followed by retransmission. In dependence on the physical mechanism adopted, the so-called "all-optical switching" can provide speed of response, transparency to modulation formats and also simultaneous processing of multiple wavelengths, as in the case of wavelength-division multiplexed (WDM) signals. At the basis of all-optical processing of signals stands the possibility of affecting at least one among the propagation parameters of an optical beam by means of a second optical beam. It means that either amplitude, or phase, or state of polarization of the beam to be processed are affected by a second light beam interacting with the first.

It is well known that optical beams interact with each other within a material through optical non-linear effects. In particular, the third order dielectric susceptibility of a material, represented by the coefficient

$$\chi^{(3)}\left(-\omega_4;\omega_1,\omega_2,\omega_3\right)$$

is at the origin of third-order optical non-linearities. In particular, when a pair of interacting optical beams is considered, a refractive index non-linear variation in the material can be induced as proportional to

$$\operatorname{Re}\chi^{(3)}\left(-\omega_s;\omega_p,-\omega_p,\omega_s\right),$$

where the real part of the non-linear susceptibility is considered, and subscripts s and p indicate, respectively, the interacting signal and pump beams. This effect is known as 'non-degenerate optical Kerr effect', and the corresponding non-linearly induced dephasing is called 'cross-phase modulation (XPM)' and is such that

$$\Delta\phi_s = \frac{2\pi}{\lambda_s} L\Delta n = \frac{2\pi}{\lambda_s} Ln_2 I_p$$

wherein $\lambda_s$ is the optical wavelength of the signal beam in vacuum,
L is the effective interaction length,

$$n_2 = \frac{3\operatorname{Re}\chi^{(3)}\left(-\omega_s;\omega_p,-\omega_p,\omega_s\right)}{4\varepsilon_o c n^2}$$

is the Kerr coefficient expressed in $m^2W^{-1}$, and
$I_p$ is the intensity of the pump beam.

The Kerr-induced dephasing can be exploited to perform all-optical switching or processing of signals in an interferometric arrangement. This process is well established in literature, see for instance Kerr-induced switching in non-linear fiber loop mirrors (NLOM).

One typical interferometric structure, used in optic communications is the Mach-Zehnder interferometer, where a laser beam propagates in optical waveguides that are essentially channels of dielectric material surrounded by a cladding or substrate material having a lower index of refraction. The light beam originally propagates into one waveguide, which eventually splits into two dielectric paths, called 'arms'. The optical power is therefore divided between the arms and recombines at the end of them. If the beams propagating in the two arms undergo the same phase shift, corresponding to the 'balanced' case, constructive interference occurs in recombination and full optical power is transmitted. The existence of a dephasing between the two arms causes a transmission loss. If the dephasing amounts to $\pi$ radians, destructive interference occurs and no optical power is transmitted.

The Mach-Zehnder interferometer is at the basis of integrated-optics electro-optical modulators. In this case, the waveguiding structure is arranged in an electro-optical crystal, and the dephasing between the arms is induced through the linear electro-optic effect, by suitably applying an electric voltage causing a corresponding change in the refractive index.

The Mach-Zehnder structure can also be exploited all-optically, through the Kerr-induced XPM. In this case, an intensity modulated pump beam is forced into one of the arms of the interferometer, so that the refractive index in the same arm is accordingly modified and a phase unbalance is generated between the two arms. A suitable intensity

modulation of pump beam is translated into phase modulation of the portion of signal beam in the activated arm and therefore into modulation of the unbalance and the transmitted signal intensity. If the unbalance of the interferometer is switched between zero and π radians, an ON/OFF switching of the signal beam can be performed.

An example of Kerr non-linearity used for switching a Mach-Zehnder interferometer between ON and OFF transmission states is provided by EP-A-1 029 400, in the Applicant's name. In such appliance, the ON-OFF switching is used to impress intensity modulation to the signal. A major problem of the cited document is that the appliance relies on the extremely low $n_2$ value of silica-based optical fiber ($\chi^{(3)}$=2.8 x $10^{-14}$ *esu* leading to $n_2 = 2.3\times10^{-20} cm^2 W^{-1}$), so that a π dephasing can be obtained at the expense of kilometric interaction length, and this constitutes an obstacle to integration of the device in more complex processing structures.

In order to carry out relatively compact structures performing all-optical processing of signals through third-order non-linearity, it is necessary to adopt optical materials conjugating high $\chi^{(3)}$ values (at least $\chi^{(3)}=10^{-11}$esu), on which the third-order NLO effects are based, with low absorption at the wavelengths of interest. In this way, interaction lengths in the cm or tens of cm range become sufficient. Moreover, the material to be used must be technologically processable, so that it enables to design and implement optical waveguides.

Third-order NLO effects have been investigated in a variety of polymeric systems. The importance of organic polymers has been realized with reference to large non-linear optical properties, high optical damage thresholds, ultrafast optical responses, architectural flexibility and ease of fabrication. Third-order optical non-linear values determined by, e.g., THG, DFWM and self-focusing techniques, greatly differ from each other due to the distinct non-linear optical processes and because of the applied experimental conditions such as the measurement wavelength and environmental conditions. Third-order optical non-linearity values are often quoted as resonant and non-resonant values resulting from their wavelength dispersion within or far from the optical absorption regions of non-linear materials. The resonant $\chi^3$ values can be several orders of magnitudes larger than that of non-resonant value.

One of the major problems to be solved regards the possibility of simultaneously reaching high $\chi^{(3)}$ values and low optical absorption, since the interaction length, in the absence of dispersion, is ruled by absorption and an effective length L is defined as the propagation length which reduces the optical power of 1/e: $L=\alpha^{-1}$ ($\alpha$ is the linear absorption coefficient of the material).

C. Amari et al., Synthetic Metals, 72, (1995), 7-12 generically discuss the optical characteristics, with a specific focus onto to the third order non-linear susceptibility $\chi^{(3)}$, of aromatic polyazomethine compounds. Two conjugated polymers of formula

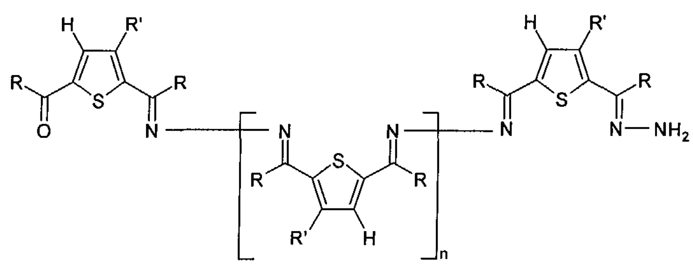

wherein R is hydrogen and R' a butyl group, or vice versa, are synthesized.

One of the main problems of such compounds is their scarce solubility, as reported by C. Amari et a., J. Mater. Chem, 1996, 6(8), 1319-1324. This paper discloses, *inter alia,* a polyazomethine, named DOZ, having the following formula

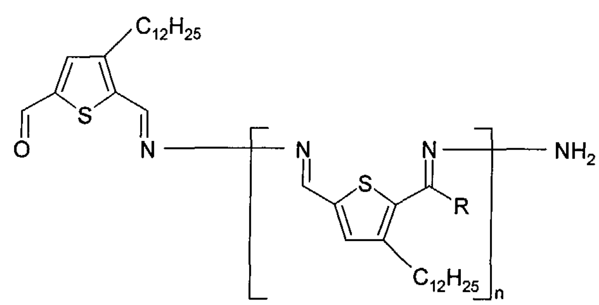

DOZ is said to be suitable for the fabrication of channel waveguides. In spite of the intrinsic linear losses, still too high for $\chi^{(3)}$ non-linear optical applications, the spectral region of most use is that of the communication wavelengths. The lowest absorption coefficients, and accordingly the linear losses, for this compound are in the region of 1550 nm and amount to 3.0 dB $cm^{-1}$.

S. Destri et al., Macromolecules, 1999. 32, 353-360 discuss the synthesis and characterization of a novel polyazomethine polymer (PAMs)

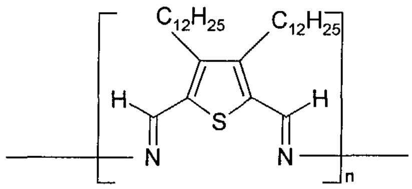

The Applicant perceived that the need was felt for a polymeric material suitable to be used in waveguides for a full optical switch, having a high $\chi^{(3)}$ coefficient together with an absorption coefficient (optical or linear loss) as low as possible. Furthermore, such polymeric material should be easily processable by spin-coating from solutions, and therefore should firstly be well soluble in suitable iorganic solvents.

Polyazomethyne derivatives proposed by the prior art, while seeming promising from the standpoint of the $\chi^{(3)}$ coefficient, showed to be not enough soluble or showed remarkable intrinsic linear losses.

Applicant found that a specific class of polyazines, having good solubility in suitable organic solvents, is not only endowed with $\chi^{(3)}$ coefficient in the order of $10^{-11}$esu, well fitting for NLO applications, but also significantly lacks of intrinsic linear losses in the near infrared spectral region, within the telecommunication wavelengths.

The present invention relates to an optical waveguide comprising at least a NLO polymer of general formula (I)

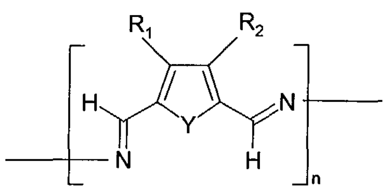

(I)

wherein Y represents S, O, Te, Se or a NR group wherein R is hydrogen or a ($C_1$-$C_4$)alkyl group;
$R_1$ and $R_2$ independently represent an optionally branched ($C_4$-$C_{24}$)alkyl chain, optionally containing at least one of -O-, -S-, -Se-, -Te-, -NR-, -PR-, -Si(R)$_2$-, -Sn(R)$_2$-, and -Ge(R)$_2$-, wherein R is as defined above; a -Z-$R_3$ group wherein Z is selected from -O-, -S-, -Se-, -Te-, -NR-, -PR-, -Si(R)$_2$-, -Sn(R)$_2$-, and -Ge(R)$_2$-, and $R_3$ is an optionally branched ($C_4$-$C_{24}$)alkyl chain; or $R_1$ and $R_2$ taken together form a 4-8-membered heterocycle containing at least one of S, O, Te, Se or a NR group wherein R is as defined above; and
n is an integer of from 3 to 10,000 included;
and deuterated derivatives thereof.

Preferably, Y represents O, S or a NR group, more preferably Y is S.

Preferably R1 and $R_2$ independently represent an optionally branched ($C_4$-$C_{18}$)alkyl chain, optionally containing one or more of -O-. Preferably R1 and $R_2$ independently represent a -Z-$R_3$ group wherein Z is -O-. More preferably $R_1$ and $R_2$ represent a $C_{8-20}$-alkyl chain.

In particular, the invention refers to an optical waveguide characterized in that it comprises a NLO polymer of formula

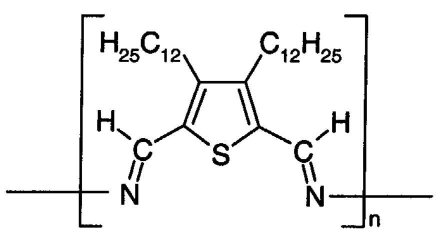

**(Ia)**

wherein n is from 20 to 100.

Compound of formula (I) according to the present invention may be prepared by known methods. For example, when the atom in α-position of the substituent is carbon, a heterocycle of formula (II)

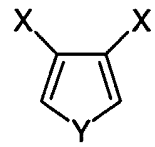

(II)

wherein Y is as defined above and X is bromine, chlorine or iodine, is reacted, according to the Kumada coupling, with 1 mole of $R_1X$ and 1 mole of $R_2X$, when a compound of formula (I) having $R_1$ different from $R_2$ is desired, or with 2 mole $R_1X$ or $R_2X$ when a compound of formula (I) having R1 equal to R2 is desired. The above mentioned molar amount of reactant should be used in a slight excess. The resulting compound of formula (III)

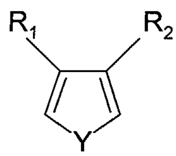

(III)

wherein $R_1$, $R_2$ and Y are as above, is lithiated and subsequently formylated according to what taught by B.L. Feringa, Synthesis (1998), 823, to give a compound of formula (IV)

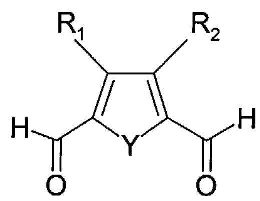

(IV)

wherein $R_1$ and $R_2$ are as above. Compound (IV) is then treated with hydrazine to provide the desired polymer of formula (I).

In the case of a compound of formula (I) wherein $R_1$ and $R_2$ represent a - Z-$R_3$ group wherein Z is oxygen, the heterocycle of formula (II) is reacted with 2 moles of ROM, wherein M is an alkali or alkaline-earth metal ion, via Williamson reaction if $R_1$ equal to $R_2$ is desired, or with 1mole of $R_1OM$ and 1 mole of $R_2OM$ if $R_1$ and $R_2$ are different; also 1 mole of dialkoxylate compound has to be used if a compound of formula (I) wherein $R_1$ and $R_2$ taken together with a ($C_2$-$C_5$)alkyl chain form a heterocycle wherein at least $R_1$ and $R_2$ are oxygen, is desired.

The resulting (V) compound

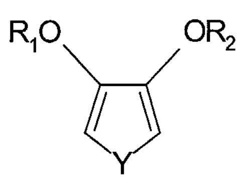

(V)

is formylated by using Vilsmeir reaction with a large excess of reagent in two steps, so as to yield the desired compound of formula (I).

The invention will be further illustrated hereinafter with reference to the following examples, which in no way do limit the scope thereof. The description is hereinbelow reported with reference to the enclosed figures, wherein

- Figure 1 schematically represents the set-up of $\chi^{(3)}$ coefficient evaluation experiment; and

- Figure 2 schematically show a Mach-Zehnder interferometer.

EXAMPLE 1

Preparation of poly(2,5-dimethylidynenitrilo-3,4-didodecylthienylene) (PDDT)

Poly(2,5- dimethylidynenitrilo -3,4-didodecylthienylene) of formula:

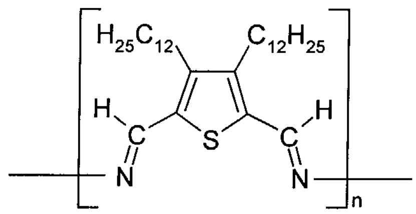

was prepared by condensation of 2,5-diformyl-3,4-didodecylthiophene with hydrazine in accordance with what taught by S. Destri et al., *supra.*

In accordance with GPC (gel-permeation chromatography, THF solution) data, this polymer is characterised by the following molecular weight characteristics:

$$Mw = 27500; Mw/Mn = 1.8; n = 58$$

EXAMPLE 2

Characterisation of the linear absorption of PDDT

The linear absorbance of PDDT as from Example 1 was measured by dissolving the polymer in spectroscopic grade $CS_2$ (>99.9%, Riedel de Haën). The mass of both the polymer and the solution was measured with a balance Precisa 240A. The weight of the dissolved polymer was 0.0978 g and the weight of the solution was 19.9032 g. The solution was stirred and heated at 50°C in order to completely dissolve the polymer. Then the solution was filtered with a 4 µm filter. The light source was a wavelength tunable laser source (Tunics 1550 - Photonetics). The solution was poured in a 30 cm long optical cell equipped with two optical windows.

In order to determine the absorption, the power of three beams was evaluated: the power of the beam impinging the optical cell (10), the power of the reflected beam (IR) and the power of the transmitted beam (It).

The absorption of $CS_2$ was measured with the same optical cell for evaluating the contribution of the solvent ($CS_2$) to the absorption,.

The results of the measurements are summarised in tablet.

Table 1

Experimental data relating to the absorption measurements and obtained absorption coefficients at λ=1550 nm.

| | I0 (mW) | IR (mW) | It (mW) | $\alpha$ ($cm^{-1}$) |
|---|---|---|---|---|
| $CS_2$+ PDDT solution | 0.60 | 0.021 | 0.532 | 0.00180 |
| $CS_2$ | 0.60 | 0.021 | 0.556 | 0.00017 |
| PDDT | | | | 0.24 |

The absorption coefficient of both the solution and the $CS_2$ were determined by the relation:

$$It=I0(1-R)^2\ exp(-\alpha L)$$

wherein $R=IR/I0$ and $L$ is the cell length.

In the hypothesis that there is no appreciable interaction between polymer and solvent, the absorption of the diluted polymer can be obtained by the relation:

$$\alpha_{diluted}=\alpha_{CS2+polymer}-\alpha_{CS2}$$

Then, the absorption of the polymer can be obtained by the relation:

$$\alpha_{polymer}=\alpha_{diluted}(W_{sol}/W_{polymer})\ (\rho_{polymer}/\rho_{CS2})$$

wherein, for the density of $CS_2$ the value $\rho_{cs2}$= 1.263 g/cm$^3$ is considered, and for the polymer $\rho$=1 is assumed (CRC Handbook of Chemistry and Physics, 79$^{th}$ Edition, CRC Press pp.3-110).

As set forth in Table 1, the absorption coefficient was found to be 0.20 cm$^{-1}$ at 1550 nm.

EXAMPLE 3

Characterisation of the $\chi^{(3)}$ coefficient of poly(2,5-dimethylidynenitrilo-3,4-didodecylthienylene)

Poly(2,5-dimethylidynenitrilo-3,4-didodecylthienylene) films with a thickness of 70-100 nm for $\chi^{(3)}$ characterisation were spin casted from 0.7 % DPPT solution in chloroform (99.9+ %, HPLC Grade, Aldrich) under rotation rate 2000 r.p.m., upon BK-7 glass substrates

The third order non-linear coefficient of DPPT was characterized by the Third Harmonic Generation (THG) technique.

The set up of such experiment is disclosed with reference to the enclosed schematic drawing of figure 1.

In Figure 1, a laser source is an OPO (2) (Master Optical Parametric Oscillator - Spectra Physics) pumped by the third harmonic of a Nd:Yag laser (1) (GCR 100, Spectra Physics). The OPO provides high power pulses at 10 Hz repetition rate, tunable in the range 400-2000 nm. The pulses are focused on the samples, mounted on a step motor (3), whose rotation can be controlled down to 1/8 deg through a personal computer (7). A fraction of the pulse is stirred by a beam splitter (8) and focused on a non-linear medium. This second line is used for normalizing the power measured on the first line, thus taking into account laser fluctuations. The third harmonic power is collected by two visible photodiodes (4, 5) (Newfocus 1801) and read by an oscilloscope (Tektronix TDS 680B). A set of filters (9, 10) absorbs the fundamental beam. The measurement is carried out by comparing the THG signal produced by the sample and the THG signal produced by the quartz, which is taken as reference. Thus, the $\chi^{(3)}$ of the sample can be determined by the following relation (T. Kurihara, Y. Mori, T. Kaino, H. Murata, N. Takada, T. Tsutsui, S. Saito, Chem. Phys. Letters, 183 (1991) pp.543-538):

$$\chi^3_{sample}=\frac{2}{\pi}\chi^3_{quartz}\frac{l_c^{quartz}}{L_{sample}}\sqrt{\frac{I_{3\omega(sample)}}{I_{3\omega(quartz)}}}$$

wherein $L_{(sample)}$ is the film thickness, $L_{(quartz)}$ is the coherence length of the quartz, $I_{3\omega(sample)}$ and $I_{3\omega(quartz)}$ are the third harmonic powers generated by the sample and by the reference respectively. The $\chi^{(3)}$ of the sample is obtained taking for the quartz the value of 2.79x10$^{-14}$ esu (B. Buchalter, G. R. Meredith, Applied Optics, 21 (1982) p.3221).

The $\chi^{(3)}$ of poly(2,5-dimethylidynenitrilo-3,4-didodecylthienylene) was measured and the value of 5x10$^{-11}$ esu was obtained for $\lambda$= 1550 nm.

Such experimental result is therefore totally unexpected and represents a surprising aspect of the present invention compared to the prior art.

Fig. 2 of the enclosed drawings schematically shows a Mach-Zehnder interferometer in which a NLO polymer of the invention was applied as an optical waveguide material. According to such drawing, a signal beam 10 propagates in optical waveguides that are essentially channels of material surrounded by a cladding or substrate material having a lower index of refraction. The signal beam 10 originally propagates into one waveguide 11, which eventually splits into two paths 12 and 13, called 'arms'. The optical power is therefore divided between the arms and recombines at the end of them along 14. An intensity modulated pump beam 15 is forced into the arm 13 of the interferometer, so

that the refractive index in the same arm is accordingly modified and a phase unbalance is generated between the two arms 12 and 13. Pump beam out is shown in 16.

A suitable intensity modulation of pump beam is translated into phase modulation of the portion of signal beam 10 in the activated arm 13 and thus into modulation of the unbalance and transmitted signal intensity. If the unbalance of the interferometer is switched between zero and π radians, an ON/OFF switching of the signal beam 10 can be performed at the output section 14.

## Claims

1. An optical waveguide comprising a polymer of formula (I)

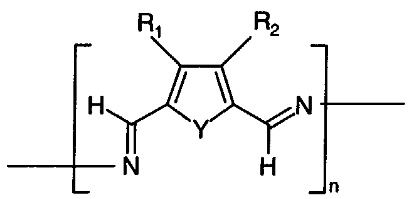

wherein Y represents S, O, Te, Se or a NR group wherein R is hydrogen or a ($C_1$-$C_4$)alkyl group;

$R_1$ and $R_2$ independently represent an optionally branched ($C_4$-$C_{24}$)alkyl chain, optionally containing at least one of -O-, -S-, -Se-, -Te-, -NR-, -PR-, -Si(R)$_2$-, -Sn(R)$_2$-, and -Ge(R)$_2$-, wherein R is as defined above; a -Z-$R_3$ group wherein Z is selected from -O-, -S-, -Se-, -Te-, -NR-, -PR-, -Si(R)$_2$-, -Sn(R)$_2$-, and -Ge(R)$_2$-, and $R_3$ is an optionally branched ($C_4$-$C_{24}$)alkyl chain; or $R_1$ and $R_2$ taken together form a 4-8-membered heterocycle containing at least one of S, O, Te, Se or a NR group wherein R is as defined above; and

n is an integer of from 3 to 10,000 included;

and deuterated derivatives thereof.

2. An optical waveguide according to claim 1 wherein Y represents O, S or a NR group.

3. An optical waveguide according to claim 2, wherein Y is S.

4. An optical waveguide according to claim 1 wherein R1 and $R_2$ independently represent an optionally branched ($C_4$-$C_{18}$)alkyl chain, optionally comprising one or more of -O-.

5. An optical waveguide according to claim 1 wherein R1 and $R_2$ independently represent a -Z-$R_3$ group wherein Z is -O-.

6. An optical waveguide according to claim 1 wherein $R_1$ and $R_2$ represent a $C_{8-20}$-alkyl chain.

7. An optical waveguide according to claim 1 comprising a polymer of formula

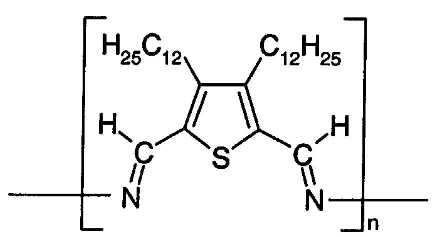

wherein n is from 20 to 100.

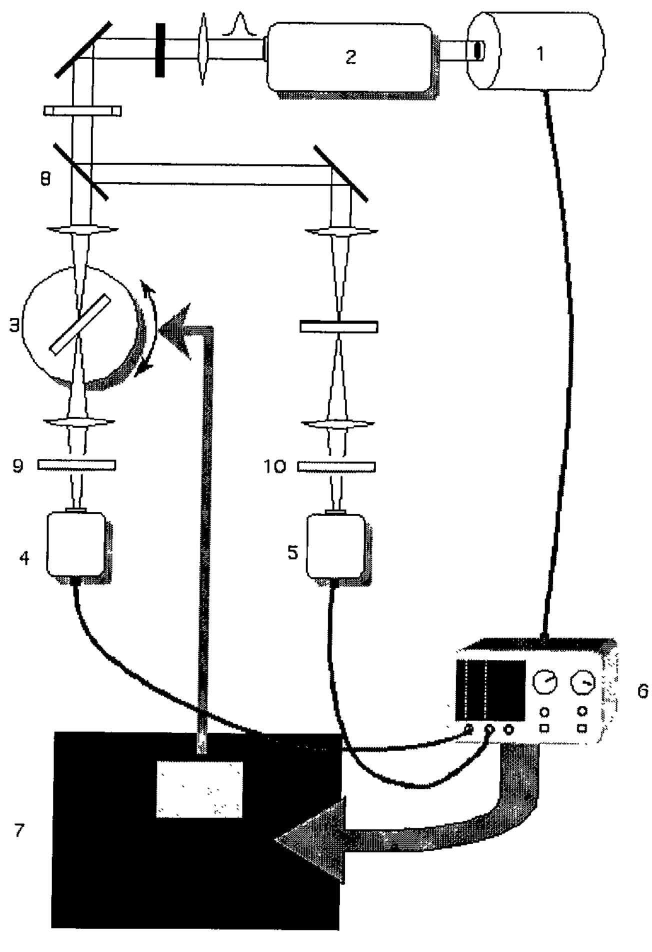


FIG. 1

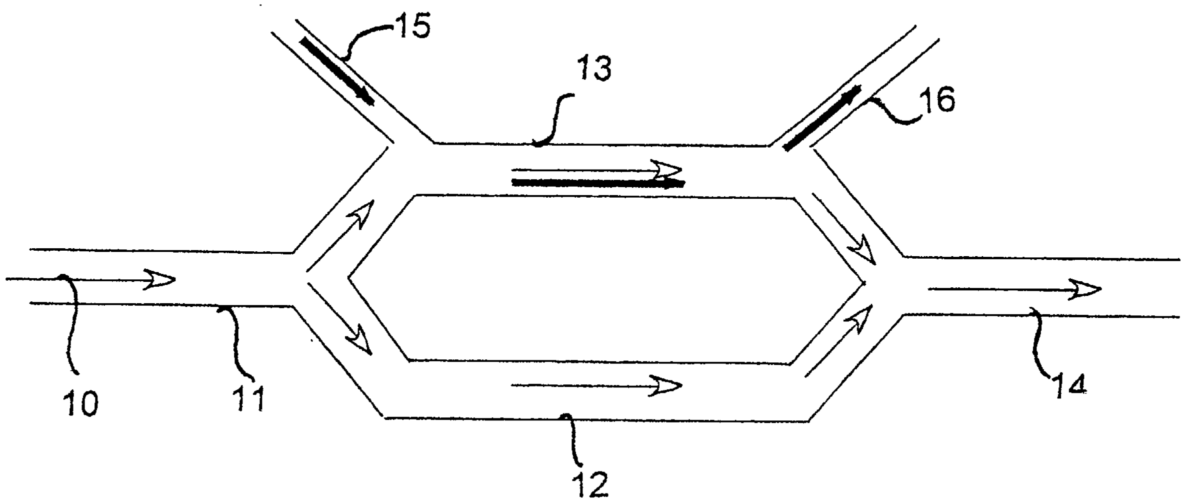


FIG. 2

European Patent Office

# EUROPEAN SEARCH REPORT

Application Number
EP 02 00 4611

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,X | DESTRI ET AL.: MACROMOLECULES, vol. 32, 29 December 1998 (1998-12-29), pages 353-360, XP002205782<br>* page 353, column 2, line 11 *<br>* page 355, column 5, line 6-29 *<br>* page 359, column 13, line 17,18; table 3 * | 1-7 | C08L33/06<br>C07C57/18<br>C07C57/52<br>C07C205/37<br>C08F138/00<br>C30B11/00<br>C08G12/08<br>C08G73/00 |
| Y | PATENT ABSTRACTS OF JAPAN vol. 012, no. 472 (C-551), 9 December 1988 (1988-12-09) & JP 63 191822 A (TOPPAN PRINTING CO LTD), 9 August 1988 (1988-08-09)<br>* abstract * | 1-7 | |
| Y | US 5 236 980 A (YANG CHEN-JEN ET AL) 17 August 1993 (1993-08-17)<br>* column 1, line 67 - column 2, line 30; claims 1,11,14,28 * | 1-7 | |
| A | PATENT ABSTRACTS OF JAPAN vol. 1997, no. 07, 31 July 1997 (1997-07-31) & JP 09 061647 A (NIPPON TELEGR &TELEPH CORP <NTT>; KANEBO LTD), 7 March 1997 (1997-03-07)<br>* abstract * | 1-7 | **TECHNICAL FIELDS SEARCHED (Int.Cl.7)**<br>C08L<br>C07C<br>C08F<br>C30B<br>C08G |
| D,A | C. AMARI ET AL.: SYNTHETIC METALS, vol. 72, 1995, pages 7-12, XP002205783<br>* tables 1-3 * | 1-7 | |

The present search report has been drawn up for all claims

| Place of search | Date of completion of the search | Examiner |
|---|---|---|
| MUNICH | 12 July 2002 | Glomm, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 02 00 4611

This annex lists the patent family members relating to the patent documents cited in the above-mentioned European search report.
The members are as contained in the European Patent Office EDP file on
The European Patent Office is in no way liable for these particulars which are merely given for the purpose of information.

12-07-2002

| Patent document cited in search report | Publication date | Patent family member(s) | Publication date |
|---|---|---|---|
| JP 63191822 A | 09-08-1988 | JP 2063063 C<br>JP 7103226 B | 24-06-1996<br>08-11-1995 |
| US 5236980 A | 17-08-1993 | NONE | |
| JP 09061647 A | 07-03-1997 | NONE | |

EPO FORM P0459

For more details about this annex : see Official Journal of the European Patent Office, No. 12/82